# EUROPÄISCHE PATENTSCHRIFT

(11) **EP 3 179 604 B1**
(45) Veröffentlichungstag und Bekanntmachung des Hinweises auf die Patenterteilung: **31.01.2018**
(21) Anmeldenummer: 15198699.9
(22) Anmeldetag: 09.12.2015
(51) Int. Cl.: H02K 1/24, H02K 15/02

(54) **RELUKTANZLÄUFER EINER SYNCHRONEN RELUKTANZMASCHINE**
RELUCTANCE ROTOR OF A SYNCHRONOUS RELUCTANCE MA-CHINE
ROTOR À RÉLUCTANCE D'UNE MACHINE À RÉLUCTANCE SYNCHRONE

(43) Veröffentlichungstag der Anmeldung: 14.06.2017
(73) Patentinhaber: Siemens Aktiengesellschaft, 80333 München (DE)
(72) Erfinder: Fischer, Ralf, 90419 Nürnberg (DE); Reinhard, Markus, 91207 Lauf (DE)

(56) Entgegenhaltungen:
- WO-A1-96/42132
- DE-A1-102009 051 975
- US-A1- 2015 162 788

## Beschreibung

Die Erfindung betrifft einen Reluktanzläufer einer synchronen Reluktanzmaschine, eine synchrone Reluktanzmaschine und ein Verfahren zur Herstellung eines Reluktanzläufer einer synchronen Reluktanzmaschine.
Reluktanzmaschinen weisen bauartbedingt eine Rotorstruktur auf, die durch flussleitende Teile und flusssperrende Teile gekennzeichnet ist. Dabei werden im Elektroblech des Läufers die Teile, die den magnetischen Fluss behindern sollen einfach ausgestanzt und nicht aufgefüllt. Dadurch entstehen mit Luft gefüllte Flusssperren. Die verbleibenden flussleitenden Teile sind in ihrem Verlauf dem magnetischen Feld im Läufer nachempfunden. Dabei entstehen je nach Achshöhe mechanisch filigrane Strukturen, die den Betrieb der synchronen Reluktanzmaschine bei höheren Drehzahlen ab einer bestimmten Baugröße verhindern.
Bislang wurden diese filigranen flussleitenden Strukturen vor allem durch mechanische Hilfen, sogenannten Zugankern, die innerhalb der Flusssperren radial angeordnet wurden unterstützt. Nachteilig dabei ist, dass diese Zuganker, ebenso wie das magnetisch leitfähige Elektroblech den magnetischen Fluss führen sich aber in einem Bereich befinden, der den magnetischen Fluss nicht leiten soll. Dadurch wird die Effizienz der synchronen Reluktanzmaschine verringert.
So ist beispielsweise aus der US 5 818 140 ein Blechschnitt eines vierpoligen Synchronreluktanzmotors bekannt, der insbesondere im Bereich der radial inneren Flusssperren derartige Zuganker aufweist. Die US 2015/162788 A1 offenbart einen weiteren Reluktanzläufer.

Ausgehend davon liegt der Erfindung die Aufgabe zugrunde einen Reluktanzläufer einer synchronen Reluktanzmaschine zu schaffen, der bei ausreichender magnetischer Leitfähigkeit auch für höhere Drehzahlen unabhängig von der Baugröße für unterschiedlichste Anwendungen geeignet ist.

Die Lösung der gestellten Aufgabe gelingt durch einen Reluktanzläufer einer synchronen Reluktanzmaschine, der um eine Welle drehbar gelagert ist, mit in Umfangsrichtung betrachtet abwechselnd aufweisenden magnetischen Vorzugsrichtungen (d-Richtung) und mit Richtungen, die einen magnetisch hohen Widerstand aufweisen (q-Richtungen), wobei der Reluktanzläufer ein Gerüst aus amagnetisch hochfestem Material, insbesondere Stahl aufweist, das Flusssperren aus dem hochfesten Material und Leerräume aufweist, die mit Metallschaum gefüllt sind und damit magnetische d- und q-Achsen des Reluktanzläufers bilden.

Die Lösung der gestellten Aufgabe gelingt ebenfalls durch eine synchrone Reluktanzmaschine mit einem erfindungsgemäßen Reluktanzläufer.

Die Lösung der gestellten Aufgabe gelingt ebenfalls durch zumindest einen Antrieb eines Schienenfahrzeugs, eines E-Cars, eines Miningtrucks oder einer Werkzeugmaschine oder eines Roboters mit zumindest einer erfindungsgemäßen synchronen Reluktanzmaschine.

Ebenso gelingt die Aufgabe der Lösung durch ein Verfahren zur Herstellung eines derartigen Reluktanzläufer einer synchronen Reluktanzmaschine, der um eine Welle drehbar gelagert ist, mit in Umfangsrichtung betrachtet abwechselnd aufweisenden magnetischen Vorzugsrichtungen (d-Richtung) und mit Richtungen, die einen magnetisch hohen Widerstand aufweisen (q-Richtungen), wobei der Reluktanzläufer ein Gerüst aus amagnetisch hochfestem Material, insbesondere Stahl aufweist, das Flusssperren aus dem hochfesten Material und Leerräume aufweist, die mit Metallschaum gefüllt sind und damit magnetische d- und q-Achsen des Reluktanzläufers bilden durch folgende Schritte:
- Bereitstellen eines Gerüstes aus amagnetisch hochfesten Material insbesondere Stahl, das Flusssperren aus amagnetisch hochfesten Material und Leerräume aufweist,
- Befüllen der Leerräume durch Metallschaum.

Die erfindungsgemäße Struktur des Reluktanzläufers ist nunmehr durch ein Gerüst gebildet, das aus magnetisch nicht leitfähigem (paramagnetisch bis diamagnetischem) Material gebildet ist. Vorteilhafterweise kommt als solches Material z.B. handelsüblicher amagnetischer Stahl in Betracht. Dieses Gerüst kann somit durch aneinander gefügte axial hintereinander angeordnete Stahlbleche oder auch durch ein einteiliges Gerüst gebildet sein.

Um nunmehr die magnetisch leitfähigen Bereiche zu erhalten weisen diese Leerräume innerhalb des Gerüstes einen Metallschaum auf, der die ferromagnetischen Eigenschaften aufweist, die zur magnetischen Leitfähigkeit beitragen. Die Metallschäume aus Eisen oder Nickel sind somit metallische Werkstoffe, die einen mehr oder weniger großen Anteil von gasgefüllten Poren aufweisen.

Bei der Herstellung werden diese vorzugsweise als Vormaterial in diese später flussleitenden Bereiche des Gerüstes eingebracht und durch anschließendes Erhitzen aufgeschäumt bis diese Bereiche vollständig ausgefüllt sind. Das Erhitzen kann dabei auch induktiv oder klassisch durch Konvektion erfolgen.

Metallschäume haben eine durch Poren und Hohlräume bedingte geringe Dichte. Damit ist es möglich ein geringes Gewicht bei hoher spezifischer Steifigkeit, Festigkeit und magnetischer Leitfähigkeit zu realisieren. Derartige Metallschäume können aus unterschiedlichen Metallen, wie Nickel bzw. Eisen unter Verwendung geeigneter Treibmittel hergestellt werden.

Beispielsweise werden Metallschäume mittels Metallpulver und einem Metallhydrid hergestellt. Beide Pulver werden miteinander vermischt und danach durch Heißpressen oder Strangpressen zu einem Vormaterial verdichtet. Anschließend wird dieses Vormaterial auf eine Temperatur oberhalb des Schmelzpunktes des jeweilig verwendeten Metalls erhitzt. Dabei setzt das Metallhydrid gasförmigen Wasserstoff frei und schäumt das Gemenge auf.

Alternativ zu dieser Herstellungsmethode kann Gas in eine Metallschmelze eingeblasen werden, die zuvor durch Zugabe fester Bestandteile schäumbar gemacht wurde. Ebenso eignet sich Spritzschäumen als Herstellungsmethode des Metallschaumes.

Die durch verschiedene - oben beispielshaft aufgeführten - Fertigungsverfahren entstehenden Schäume können weiterhin in Einphasenschäume, Zweiphasenschäume und Mehrphasenschäume unterteilt werden. Der einphasige Schaum hat als Preform beispielsweise metallische Hohlkugeln. Der Zweiphasenschaum hat als Preform beispielsweise mit Metall beschichtete keramische Hohlkugeln. Der Mehrphasenschaum weist keramische Hohlkugeln mit einem zusätzlichen Bindemittel auf.

Metallschäume sind derart variabel ausbildbar, dass sich diese durch eine große Vielzahl unterschiedlicher Strukturen und Werkstoffeigenschaften auszeichnen können. Die durch Hohlräume oder Poren geschaffene Porosität der Schäume reduziert die Dichte der vorgesehenen Bauteile in den Leerräumen deutlich und damit das Gesamtgewicht des Rotors. Die magnetische Leitfähigkeit soll dabei gegenüber herkömmlichen Reluktanzläufern unverändert sein.

Zur Herstellung des Metallschaums sind auch klassische Herstellverfahren ähnlich der Herstellung eines Schaumstoffes geeignet. Dies beinhaltet ein physikalisches Schäumen, bei welchem das Material durch einen physikalischen Vorgang geschäumt wird.

Auch auf einer chemischen Basis kann ein Schäumen erfolgen. Beim chemischen Schäumen wird beispielsweise einem Granulat ein Treibmittel, meist in Form eines so genannten Masterbatchgranulates, zugegeben. Durch Wärmezufuhr kann sich dann ein flüchtiger Bestandteil des Treibmittels abspalten, was zum Aufschäumen der Metallschmelze führt.

Eine weitere Option ist das mechanische Schäumen. Hierbei wird beispielsweise Luft oder ein anderes Gas in das zu schäumende Metall oder eine metallische Paste eingerührt. Durch ein Vernetzen des Metalls oder durch Gelieren der Paste verfestigt sich dieser Metallschaum.

Dieses Gerüst des Reluktanzläufers ist idealerweise auf einem magnetisch leitfähigen Welle aufgebracht, die damit neben dem magnetisch leitfähigen Metallschaum in den Leerräumen des Gerüstes zur Ausbildung der d-Achse mit beiträgt.

In ihrem Querschnitt kann dabei die Welle je nach Poligkeit des Reluktanzläufers dementsprechend in ihrem Querschnitt ausgebildet sein und zur Flussführung beitragen.

Bei dem erfindungsgemäßen Reluktanzläufer und der damit verbundenen mechanischen steiferen Struktur aufgrund des Gerüstes vorzugsweise aus Stahl, sind nunmehr auch Maschinen mit größeren Achsdurchmessern und/oder für höhere Drehzahlen geeignet.

Dies geschieht durch den erfindungsgemäßen Aufbau des Reluktanzläufers ohne Einbußen der Effizienz, die normalerweise u.a. durch die sonst üblichen Zuganker in den Flusssperren auftreten.

Die Erfindung sowie weitere vorteilhafte Ausgestaltungen der Erfindung sind den Ausführungsbeispielen zu entnehmen. Darin zeigen
- FIG 1: einen prinzipiellen Längsschnitt einer synchronen Reluktanzmaschine,
- FIG 2: einen Querschnitt eines Reluktanzläufers, und
- FIG 3: einen weiteren Querschnitt eines Reluktanzläufers.

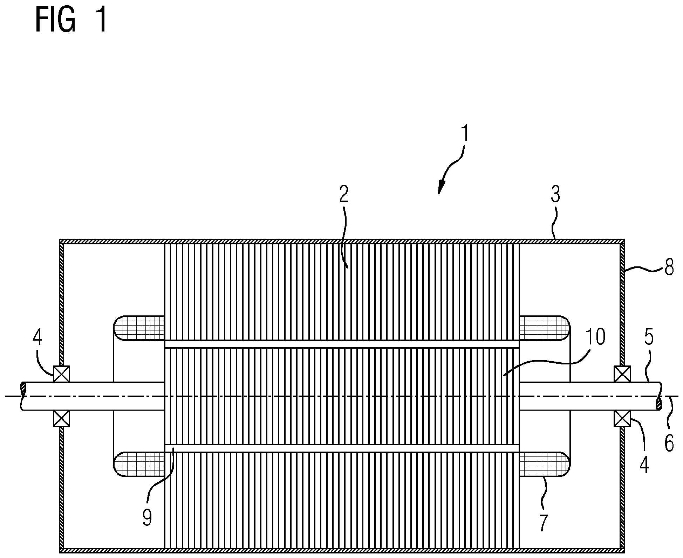

FIG 1 zeigt in einem prinzipiellen Längsschnitt einer synchronen Reluktanzmaschine 1 einen Stator 2 mit einem Wicklungssystem 7, das in nicht näher dargestellten Nuten des Stators 2 angeordnet ist. Durch Bestromen des Wicklungssystems 7 und elektromagnetischer Wechselwirkung über einen Luftspalt 9 der synchronen Reluktanzmaschine 1 dreht sich der Reluktanzläufer 10 um eine Achse 6. Der Reluktanzläufer 10 ist über Lager 4 und deren Lagerschilder 8 in einem Gehäuse 3 gelagert.

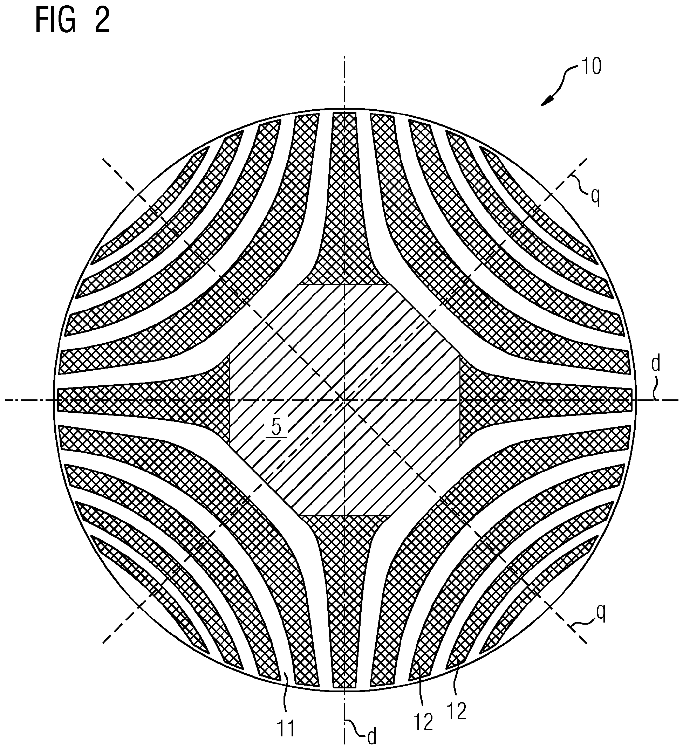

FIG 2 zeigt einen Querschnitt eines Reluktanzläufers 10 der vierpolig ausgeführt ist. Dabei ist ein Gerüst 11 vorgesehen, das die im Betrieb auftretenden Zentrifugalkräfte aufnimmt. Das Gerüst 11 weist in seinen dafür vorgesehenen Leerräumen - also den Ausstanzungen - nunmehr einen Metallschaum 12 auf, der die magnetische Leitfähigkeit übernimmt. Die Welle 5 ist in dieser Ausführungsform achteckig ausgebildet und passt sich somit der Vierpoligkeit des Reluktanzläufers 10 ideal an. Des Weiteren wird durch die magnetische Leitfähigkeit der Welle 5 die Ausbildung der d- und q-Richtungen des Reluktanzläufers 10 verstärkt.

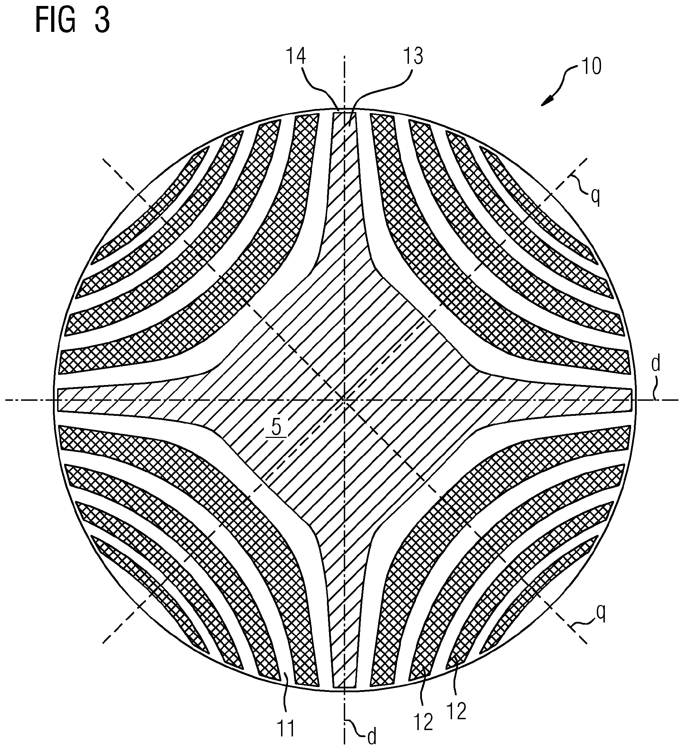

FIG 3 zeigt eine weitere Ausführungsform eines vierpoligen Reluktanzläufers 10, der wie in der vorherigen Ausführungsform in den Leerräumen des Gerüstes 11 Metallschaum 12 aufweist. Die Welle 5 ist jedoch, insbesondere im inneren Bereich dahingehend ausgeführt, dass ihre Ausläufer 13 bis an die radial äußeren Begrenzungskanten 14 des Gerüstes 11 reichen.

Die Begrenzungskanten 14 sind in ihrer radialen Dicke derart ausgeführt, dass auch bei den anstehenden Drehzahlen im Betrieb der synchronen Reluktanzmaschine 1 eine ausreichende Festigkeit und Rückstellkraft vorhanden ist.

Die radiale Dicke der Leerräume, die mit dem Metallschaum 12 versehen werden ist dabei insbesondere im Bereich der q-Achse mindestens um den Faktor 1,5 größer als die Dicke der benachbarten Flusssperren.

Derartige Reluktanzmaschinen 1 werden vorzugsweise bei Werkzeugmaschinen, Robotern oder auch Kompressoren und Traktionsantrieben von Schienenfahrzeugen und E-Cars eingesetzt.

## Patentansprüche

1. Reluktanzläufer (10) einer synchronen Reluktanzmaschine (1), der um eine Welle (5) drehbar gelagert ist, mit in Umfangsrichtung betrachtet abwechselnd aufweisenden magnetischen Vorzugsrichtungen (d-Richtung) und mit Richtungen, die einen magnetisch hohen Widerstand aufweisen (q-Richtungen), **dadurch gekennzeichnet, dass** der Reluktanzläufer (10) ein Gerüst (11) aus amagnetisch hochfestem Material, insbesondere Stahl aufweist, das Flusssperren aus dem hochfesten Material und Leerräume aufweist, die mit Metallschaum (12) gefüllt sind und damit magnetische d- und q-Achsen des Reluktanzläufers (10) bilden.

2. Synchrone Reluktanzmaschine (1)mit einem Reluktanzläufer (10) nach Anspruch 1.

3. Antrieb eines Schienenfahrzeugs eines E-Cars, eines Miningtrucks oder einer Werkzeugmaschine oder eines Roboters mit zumindest einer synchronen Reluktanzmaschine (1) nach Anspruch 2.

4. Verfahren zur Herstellung eines Reluktanzläufer (10) einer synchronen Reluktanzmaschine (1), der um eine Welle (5) drehbar gelagert ist, mit in Umfangsrichtung betrachtet abwechselnd aufweisenden magnetischen Vorzugsrichtungen (d-Richtung) und mit Richtungen, die einen magnetisch hohen Widerstand aufweisen (q-Richtungen), **dadurch gekennzeichnet, dass** der Reluktanzläufer (10) ein Gerüst (11) aus amagnetisch hochfestem Material, insbesondere Stahl aufweist, das Flusssperren aus dem hochfesten Material und Leerräume aufweist, die mit Metallschaum (12) gefüllt sind und damit magnetische d- und q-Achsen des Reluktanzläufers (10) bilden durch folgende Schritte
- Bereitstellen eines Gerüstes (11) aus amagnetisch hochfesten Material insbesondere Stahl, das Flusssperren aus amagnetisch hochfesten Material und Leerräume aufweist,
- Befüllen der Leerräume durch Metallschaum (12).

5. Verfahren nach Anspruch 4, **dadurch gekennzeichnet, dass** das Gerüst (11) einteilig oder in axialen Schichten aufgebaut wird.

6. Verfahren nach Anspruch 4 oder 5, **dadurch gekennzeichnet, dass** der Metallschaum (12) in den Leerräumen durch Erhitzen oder induktives Erwärmen aufgeschäumt wird.

## Claims

1. Reluctance rotor (10) of a synchronous reluctance machine (1), which is supported rotatably about a shaft (5), having, viewed in the circumferential direction, alternate magnetic preferred directions (d-direction) and having directions which have a magnetically high resistance (q-directions), **characterised in that**
the reluctance motor (10) has a frame (11) made from nonmagnetic high-tensile material, in particular steel, which has stream barriers made from high-tensile material and expansion spaces, which are filled with metal foam (12) and thus form magnetic d- and q-axes of the reluctance rotor (10).

2. Synchronous reluctance machine (1) with a reluctance rotor (10) according to claim 1.

3. Drive of a rail vehicle of an E-car, of a mining truck or a machine tool or a robot having at least one synchronous reluctance machine (1) according to claim 2.

4. Method for producing a reluctance rotor (10) of a synchronous reluctance machine (1), which is supported rotatably about a shaft (5), having, viewed in the circumferential direction, alternate magnetic preferred directions (d-direction) and having directions which have a high magnetic resistance (q-directions), **characterised in that** the reluctance rotor (10) has a frame (11) made from nonmagnetic high-tensile material, in particular steel, which has stream barriers made from high-tensile material and expansion spaces, which are filled with metal foam (12) and thus form magnetic d- and q-axes of the reluctance rotor (10) by means of the following steps
- providing a frame (11) made from nonmagnetic high-tensile material, in particular steel, which has stream barriers made from nonmagnetic high-tensile material and expansion spaces,
- filling the expansion spaces with metal foam (12).

5. Method according to claim 4, **characterised in that** the frame (11) is assembled in one piece or in axial layers.

6. Method according to claim 4 or 5, **characterised in that** the metal foam (12) is foamed into the expansion spaces by heating or by inductive heating.

## Revendications

1. Rotor (10) à reluctance d'une machine (1) à reluctance synchrone, qui est monté tournant autour d'un arbre (5), ayant, en alternance considéré dans la direction périphérique, des directions (direction-d) préférées magnétiques et des directions qui ont (directions-q) une grande résistance du point de vue magnétique,
**caractérisé en ce que**
le rotor (10) à reluctance a une ossature (11) en matériau très résistant d'un point de vue amagnétique, notamment en acier, qui a des blocages de flux en matériau très résistant et des espaces vides, qui sont remplis de mousse (12) métallique et forment ainsi des axes magnétiques d et q du rotor (10) à reluctance.

2. Machine (1) à reluctance synchrone ayant un rotor (10) à reluctance suivant la revendication 1.

3. Entraînement d'un véhicule ferroviaire d'un E-car, d'un miningtruck ou d'une machine-outil ou d'un robot, comprenant au moins une machine (1) à reluctance synchrone suivant la revendication 2.

4. Procédé de fabrication d'un rotor (10) à reluctance d'une machine (1) à reluctance synchrone, qui est monté tournant autour d'un arbre (5), ayant, en alternance considéré dans la direction périphérique, des directions (direction-d) préférées magnétiques et des directions qui ont (directions-q) une grande résistance du point de vue magnétique, **caractérisé en ce que**
le rotor (10) à reluctance a une ossature (11) en matériau très résistant d'un point de vue amagnétique, notamment en acier, qui a des blocages de flux en matériau très résistant et des espaces vides, qui sont remplis de mousse (12) métallique et forment ainsi des axes magnétiques d et q du rotor (10) à reluctance, par les stades suivants
- on se procure une ossature (11) en un matériau très résistant du point de vue amagnétique, notamment en acier, qui a des blocages de flux en matériau très résistant du point de vue amagnétique et des espaces vides,
- on remplit les espaces vides de mousse (12) métallique.

5. Procédé suivant la revendication 4,
**caractérisé en ce que**
l'on constitue l'ossature (11) d'une seule pièce ou en des couches axiales.

6. Procédé suivant la revendication 4 ou 5,
**caractérisé en ce que**
l'on fait mousser la mousse (12) métallique dans les espaces vides par chauffage ou par réchauffement par induction.
